# EUROPÄISCHE PATENTSCHRIFT

(11) **EP 2 828 129 B1**
(45) Veröffentlichungstag und Bekanntmachung des Hinweises auf die Patenterteilung: **25.05.2016**
(21) Anmeldenummer: 13710292.7
(22) Anmeldetag: 06.03.2013
(51) Int. Cl.: B60R 22/36, B60R 22/38

(54) **GURTAUFROLLER SOWIE VERFAHREN ZUM SPERREN EINES GURTAUFROLLERS**
BELT RETRACTOR, AND METHOD FOR LOCKING A BELT RETRACTOR
ENROULEUR DE CEINTURE ET PROCÉDÉ PERMETTANT D'ARRÊTER UN ENROULEUR DE CEINTURE

(30) Priorität: 19.03.2012 DE 102012005330
(43) Veröffentlichungstag der Anmeldung: 28.01.2015
(73) Patentinhaber: TRW Automotive GmbH, 73553 Alfdorf (DE)
(72) Erfinder: BEDAK, Nizam, 73525 Schwaebisch Gmuend (DE); KIELWEIN, Thomas, 73569 Eschach (DE); MICHEL, Frederic, 73527 Schwaebisch Gmuend (DE); RINK, Juergen, 73550 Waldstetten (DE); SEHIC, Demal, 73525 Schwäbisch Gmünd (DE)
(74) Vertreter: Prehn, Manfred
(86) Internationale Anmeldenummer: PCT/EP2013/000651
(87) Internationale Veröffentlichungsnummer: WO 2013/139437

(56) Entgegenhaltungen:
- EP-A2- 0 112 032
- US-A- 4 673 144
- US-A- 5 333 906
- US-A- 5 660 346

## Beschreibung

Die Erfindung betrifft einen Gurtaufroller mit einem Rahmen, der mit Blockierzähnen versehen ist, und mit einer Gurtspule, die drehbar im Rahmen gelagert ist und an mindestens einem axialen Ende mit Sperrzähnen versehen ist, die in die Blockierzähne eingreifen können, wenn die Gurtspule aus einer Ausgangsstellung in eine Sperrstellung verstellt wird. Die Erfindung betrifft ferner ein Verfahren zum Blockieren einer Gurtspule eines solchen Gurtaufrollers.

Bei einem solchen Gurtaufroller wird die Gurtspule zum Blockieren relativ zum Rahmen verlagert, sodass die an der Gurtspule angeordneten Sperrzähne in Eingriff mit den Blockierzähnen gelangen, die am Rahmen vorgesehen sind. Bei den bisher verwendeten Gurtaufrollern wird die Gurtspule insgesamt so verschoben, dass die Achse des Gurtaufrollers in Richtung der Blockierzähne versetzt wird, so dass die Lastübertragung über beide Flansche der Gurtspule erfolgt. Dadurch ist aber eine sehr aufwendige Lagerung der Gurtspule erforderlich. US 5333906 A beschreibt einen Gurtaufroller gemäß den Oberbegriff des Patentanspruchs 1.

Aufgabe der Erfindung ist es, einen Gurtaufroller bereitzustellen, der ein besseres Ansprechverhalten vor allem bei niedrigen Auszugskräften sowie eine verbesserte Rückstellung der Gurtspule in die Ausgangsstellung ermöglicht.

Erfindungsgemäß ist dafür bei einem Gurtaufroller der eingangs genannten Art ein Blockierlager vorgesehen, das mit der Gurtspule an der Seite zusammenwirkt, an der die Sperrzähne angeordnet sind und diese bis zu einer ersten Lastschwelle in der Ausgangsstellung hält, und ein Lastlager, das mit der Gurtspule an der entgegengesetzten Seite zusammenwirkt und diese bis zu einer zweiten Lastschwelle in der Ausgangsstellung hält, wobei die erste Lastschwelle unterhalb der zweiten Lastschwelle liegt.

Für eine Blockierung bei niedrigen Auszugskräften wird also lediglich das Blockierlager verschoben, also die Gurtspule gewissermaßen um das Lastlager gekippt. Der Erfindung liegt die Überlegung zu Grunde, dass bei geringen Auszugskräften die gesamte Last über einen Flansch übertragen werden kann. Daher muss bei diesen geringen Auszugskräften zum Lösen der Sperrung der Gurtspule auch nur ein Lager, nämlich das Blockierlager, zurück in die Ausgangsstellung bewegt werden. Diese Rückstellkraft kann beispielsweise durch eine entsprechende Ausbildung des Lastlagers erfolgen, durch die die Gurtspule federnd in die Ausgangsstellung zurückbewegt wird. Erst bei hohen Auszugskräften wird das Lastlager ebenfalls verschoben, sodass die Gurtspule insgesamt parallel zur Ausgangsstellung verschoben wird und die Achse der Gurtspule somit wieder rechtwinklig zur Auszugsrichtung steht und eine Lastübertragung über beide Flansche der Gurtspule möglich ist.

Die Lastschwelle des Lastlagers ist vorzugsweise größer als 300 N, sodass bei der Mehrzahl der normalen Blockiervorgänge, beispielsweise beim Bremsen, nur das Blockierlager verschoben wird.

Vorzugsweise ist ein Steuermechanismus vorgesehen, der die Gurtspule von einer Ausgangsstellung in eine Sperrstellung verschieben kann, in der die Sperrzähne mit den Blockierzähnen in Eingriff stehen. Ein solcher Steuermechanismus stellt sicher, dass die Gurtspule bzw. die Sperrzähne der Gurtspule so ausgerichtet sind, dass diese in die Blockierzähne des Rahmens eingreifen kann bzw. können. Dieser Steuermechanismus sorgt dafür, dass die Verzahnung der Gurtspule lagerichtig in die Blockzähne des Rahmens eingesteuert wird, sodass ein Eingriff der Verzahnung in die Blockierzähne hergestellt ist, bevor auf die Gurtspule hohe Lasten einwirken.

Der Steuermechanismus weist beispielsweise einen rahmenseitig schwenkbar gelagerten Steuerhebel auf, der am Blockierlager angreift und die Gurtspule in die Sperrstellung verschieben kann.

Vorzugsweise ist die Gurtspule an diesem Steuerhebel gelagert, sodass eine separate Lagerung für die Gurtspule auf dieser Seite entfällt.

Das Blockierlager kann einen Führungsstift aufweisen, der in einem schräg angestellten Führungskanal gelagert ist, dessen Boden insbesondere mit der Längsachse der Gurtspule einen Winkel einschließt, der im Bereich von 50° bis 80°, vorzugsweise bei 60° liegt. Der Führungskanal ermöglicht es der Gurtspule, sich aus der Ausgangsstellung in die Blockierstellung zu verlagern, wenn entsprechende Kräfte auf die Gurtspule einwirken. Ein Vorteil dieser Konstruktion besteht darin, dass keinerlei separate Bauteile notwendig sind, um die Gurtspule in die Sperrstellung beziehungsweise in die Ausgangsstellung zurück zu bewegen. Da die Gurtspule in Richtung ihrer Achse durch diese Verlagerung vorgespannt wird, erfolgt automatisch eine Rückstellung in die Ausgangsposition. Ein separater Rückstellmechanismus ist also nicht erforderlich. Dieser Führungskanal hat vorzugsweise eine Länge in der Größenordnung von 3 mm. Es hat sich herausgestellt, dass bereits ein derart kurzer Weg von der Ausgangsstellung in die Blockierstellung ausreicht, um im Normalbetrieb, also wenn die Gurtspule sich in der Ausgangsstellung befindet, diese zuverlässig gelagert zu halten, ohne dass es zu einem unbeabsichtigten Eingriff der Sperrzähne in die Blockierzähne kommt.

Es ist aber auch denkbar, dass am Blockierlager und/oder am Lastlager jeweils eine separate Rückstellfeder vorgesehen ist, die das Blockierlager und/oder das Lastlager in die Ausgangsstellung beaufschlagt. Durch eine solche Rückstellfeder kann die gewünschte Rückstellkraft genau eingestellt werden. Zudem kann durch die Wahl einer entsprechenden Rückstellfeder auch die gewünschte Lastschwelle des jeweiligen Lagers eingestellt werden.

Vorzugsweise ist das Blockierlager und/oder das Lastlager jeweils in einer Gehäuseschale des Gehäuses angeordnet und begrenzt in diesem beweglich. Durch die Gehäuseschale ist zum einen eine individuelle Anpassung des Blockierlagers bzw. des Lastlagers möglich, sodass die Lastschwellen beider Lager schnell und unkompliziert angepasst werden können. Zum anderen sind durch diese Gehäuseschalen beide Lager sicher vor Fremdeinwirkungen geschützt, sodass eine zuverlässige Funktion des Gurtaufrollers sichergestellt ist.

Erfindungsgemäß ist des Weiteren ein Verfahren zum Sperren eines erfindungsgemäßen Gurtaufrollers vorgesehen, wobei bei einer geringen Auszugskraft lediglich das Blockierlager verschoben wird, sodass die Sperrzähne in die Blockierzähne eingreifen und das Lastlager erst bei einer definierten, höheren Auszugskraft verschoben wird. Hinsichtlich der sich ergebenden Vorteile wird auf die obigen Erläuterungen verwiesen.

Weitere Vorteile und Merkmale ergeben sich aus der nachfolgenden Beschreibung in Verbindung mit den beigefügten Zeichnungen. In diesen zeigen:
- Figur 1 eine Schnittansicht durch einen erfindungsgemäßen Gurtaufroller mit der Gurtspule in einer Ausgangsposition,
- Figur 2 der Gurtaufroller aus Figur 1 mit dem Blockierlager in einer Sperrstellung,
- Figur 3 a) bis c) eine schematische Darstellung der Funktionsweise des Gurtaufrollers aus Figur 1, und
- Figur 4 eine schematische Darstellung einer alternativen Ausführungsform eines erfindungsgemäßen Gurtaufrollers.

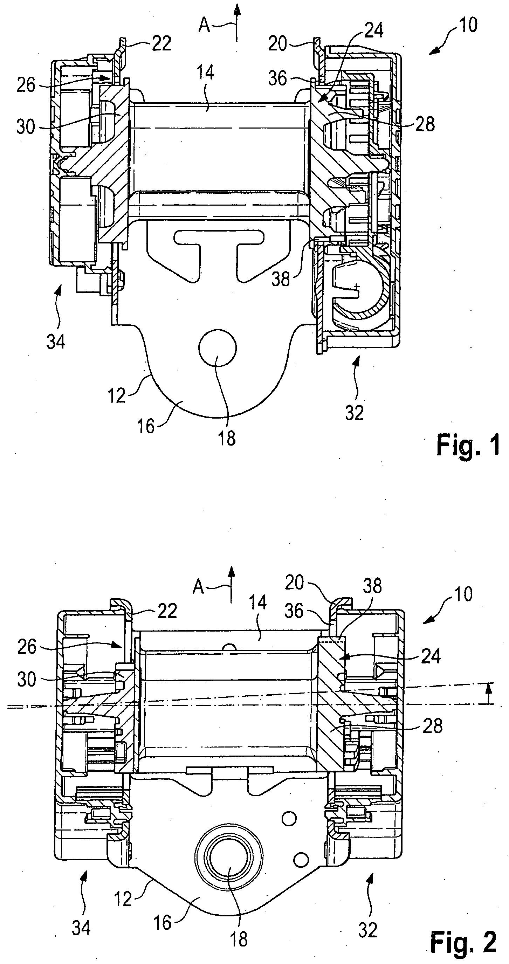

In den Figuren 1 und 2 ist ein Gurtaufroller 10 gezeigt, der einen Rahmen 12 aufweist, in dem eine Gurtspule 14 drehbar gelagert ist. Der Rahmen 12 weist ein Rückenteil 16 mit einer Öffnung 18 zur Befestigung des Gurtaufrollers 10 auf sowie zwei Seitenteile 20, 22. Diese weisen jeweils eine Öffnung 24, 26 auf, innerhalb derer Flansche 28, 30 aufgenommen ist, die jeweils an einem axialen Ende der Gurtspule 14 vorgesehen ist.

Das erste Seitenteil 20 bildet gemeinsam mit dem ersten Flansch 28 ein Blockierlager 32. In der Öffnung 24 des ersten Seitenteils 20 sind Blockierzähne 36 vorgesehen, die mit Sperrzähnen 38, die am ersten Flansch 28 der Gurtspule 14 vorgesehen sind, zusammenwirken und so eine Drehung der Gurtspule 14 verhindern können. Zum Blockieren der Gurtspule 14 muss also der erste Flansch 28 der Gurtspule 14 in Auszugsrichtung A so verschoben, dass die Sperrzähne 38 in die Blockierzähne 36 eingreifen. Das zweite Seitenteil 22 bildet gemeinsam mit dem zweiten Flansch 30 ein Lastlager 34. An diesem kann ebenfalls ein Sperrmechanismus oder ein Antrieb des Gurtaufrollers 10 vorgesehen sein.

Die Gurtspule 14 ist sowohl im Blockierlager 32 wie auch im Lastlager 34 in einer Auszugsrichtung A des Gurtbandes begrenzt verschiebbar gelagert. Das Blockierlager 32 sowie das Lastlager 34 weisen jeweils eine Lastschwelle auf, die einer definierten, in Auszugsrichtung A wirkenden Kraft entspricht, die auf die Gurtspule beziehungsweise die Flansche 28, 30 der Gurtspule 14 wirken muss, um den jeweiligen Flansch 28, 30 in Auszugsrichtung A aus der Ausgangsstellung zu verschieben.

Die Lastschwelle des Blockierlagers 32 liegt hier unterhalb der Lastschwelle des Lastlagers 34, sodass das Blockierlager 32 bei Auszugskräften, die unterhalb einer Grenz-Auszugskraft liegen, sich bewegt und der Flansch 28 gegen die Blockierzähne verschoben wird (Figur 2). Erst wenn die Auszugskraft so weit ansteigt, dass auch die Lastschwelle des Lastlagers überschritten wird, wird dieses in Auszugsrichtung A verschoben, sodass die Gurtspule bei einer Auszugskraft, die oberhalb der Grenz-Auszugskraft liegt, gewissermaßen parallel zur Ausgangsstellung verschoben wird und die Achse der Gurtspule wieder senkrecht zur Auszugsrichtung A verläuft.

Der Funktionsweise dieses Gurtaufrollers 10 liegt die Überlegung zu Grunde, dass bei geringen Auszugskräften eine Lastübertragung über einen Flansch der Gurtspule, also mittels des Blockierlagers 32, ausreichend ist. Erst bei größeren Auszugskräften erfolgt die Lastübertragung wieder über beide Flansche und damit beide Lager 32, 34, die dann beide in Auszugsrichtung A am Rahmen 12 am Rahmen anliegen. Zudem verläuft die Achse der Gurtspule 14 in dieser Position wieder senkrecht zur Auszugsrichtung A, sodass das Gurtband gerade von der Gurtspule 14 abläuft.

An beiden Lagern 32, 34 sind jeweils Einrichtungen vorgesehen, die das jeweilige Lager 32, 34 in die Ausgangsstellung zurückdrängen bzw. zurückbewegen können. Diese können beispielsweise durch Federn gebildet sein oder durch eine Mechanik, die die Flansche 28, 30 aktiv in die Ausgangsstellung bewegt.

Am Blockierlager 32 ist zudem ein Steuermechanismus vorgesehen, der die Gurtspule vor dem Verschieben in die Sperrstellung lagerichtig ausrichtet, sodass die Sperrzähne in die Blockierzähne eingreifen können.

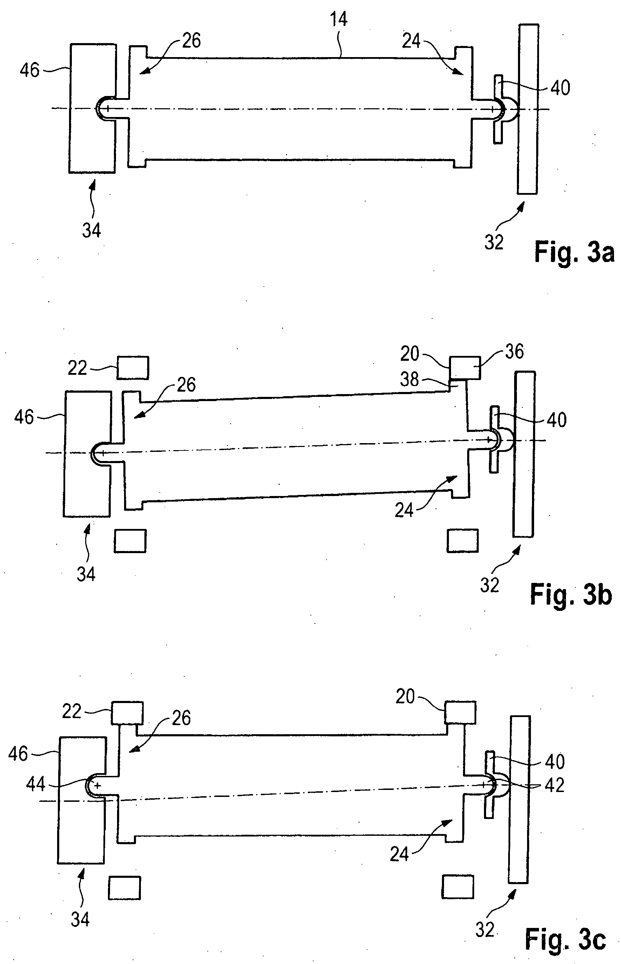

Die Funktionsweise des Gurtaufrollers 10 ist nochmals schematisch in den Figuren 3 a) bis c) dargestellt.

Im regulären Betrieb befindet sich die Gurtspule 14 in einer Grundposition, in der beide Lager 32, 34 in der Ausgangsstellung sind (Figur 3a). Das Blockierlager 32 ist hier in einem Steuerhebel 40 gelagert, der die Gurtspule 14 verschieben kann und sicherstellt, dass die Sperrzähne 38 in die Blockierzähne 36 eingreifen können.

Bei Überschreiten einer ersten Lastschwelle wird das Blockierlager 32 in Auszugsrichtung A bewegt, so dass die Sperrzähne 38 in die Blockierzähne eingreifen und die Gurtspule 14 gesperrt ist (Figur 3b).

Nach Überschreiten der Lastschwelle des Lastlagers 34 wird dieser Flansch 30 ebenfalls verschoben, so dass auch dieser am Rahmen 12 beziehungsweise am Seitenteil 22 des Gurtaufrollers 10 anliegt (Figur 3c). Die Lastübertragung von der Gurtspule 14 auf den Rahmen 12 kann jetzt gleichmäßig über beide Seitenteile 20, 22 des Rahmens 12 erfolgen.

In der in den Figuren 3 a) bis c) gezeigten Ausführungsform weisen das Blockierlager 32 und das Lastlager 34 jeweils einen Führungsstift 42, 44 auf, der am jeweiligen Flansch 28, 30 der Gurtspule 14 vorgesehen ist. Der Führungsstift 42 des Blockierlagers 32 ist im Steuerhebel 40 des Steuermechanismus gelagert.

Der Führungsstift 44 des Lastlagers 34 ist unverschieblich in einem Lagerelement 46 gelagert ist. Steigt die Auszugskraft über die Lastschwelle des Lastlagers 34 an, wird das gesamte Lagerelement 46 in Auszugsrichtung A verschoben.

Das Blockierlager 32 in der in Figuren 3 a) bis c) gezeigten Ausführungsform kann nicht nur in Auszugsrichtung A verschiebbar gelagert sein, sondern optional auch zusätzlich eine Bewegung in axialer Richtung der Gurtspule 14 ermöglichen.

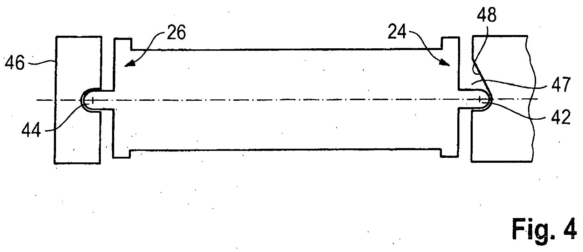

Eine weitere Ausführungsform ist schematisch in Figur 4 dargestellt. Der Führungsstift 42 des Blockierlagers 32 ist hier in einem rahmenseitigen Führungskanal 47 angeordnet, der in Auszugsrichtung A schräg angestellt ist. Wirkt auf die Gurtspule 14 eine Auszugskraft, wird der Führungsstift 42 entlang des Führungskanals 47 verschoben, wobei der erste Flansch 28 derart verschoben wird, dass die Sperrzähne 38 in die Blockierzähne 36 eingreifen.

Die Lastschwelle des Blockierlagers 32 kann in dieser Ausführungsform über die Neigung des Bodens 48 des Führungskanals 47 eingestellt werden. Vorzugsweise liegt der Neigungswinkel im Bereich von 50° bis 80°, vorzugsweise bei 60° relativ zur Längsachse der Gurtspule in der Ausgangsstellung. Die Tiefe des Führungskanals beträgt vorzugsweise ca. 3 mm. Da die Gurtspule 14 beim Verschieben des Blockierlagers 32 in die Blockierstellung vorgespannt wird, wirkt auf das Blockierlager 32 eine Rückstellkraft, die den ersten Flansch 28 zurück in die Ausgangsstellung beaufschlagt.

Alternativ können die Lastschwellen beider Lager 32, 34 auch über Federelemente eingestellt werden.

Die Grenz-Lastschwelle des Lastlagers 34 ist vorzugsweise so gewählt, dass eine Verschiebung des Lastlagers erst bei einer in Auszugsrichtung A wirkenden Zugkraft von mehr als 300 N erfolgt.

Beide Lager 32, 34 sind vorzugsweise jeweils in einer Gehäuseschale gelagert und begrenzt in dieser beweglich, sodass die Lager 32, 34 vor äußeren Einflüssen geschützt sind.

## Patentansprüche

1. Gurtaufroller (10) mit einem Rahmen (12), der mit Blockierzähnen (36) versehen ist, einer Gurtspule (14), die drehbar im Rahmen (12) gelagert ist und an mindestens einem axialen Ende mit Sperrzähnen (38) versehen ist, die in die Blockierzähne (36) eingreifen können, wenn die Gurtspule (14) aus einer Ausgangsstellung in eine Sperrstellung verstellt ist, einem Blockierlager (32), das mit der Gurtspule (14) an der Seite zusammenwirkt, an dem die Sperrzähne (38) angeordnet sind und diese bis zu einer ersten Lastschwelle in der Ausgangsstellung hält, und einem Lastlager (34), das mit der Gurtspule (14) an der entgegengesetzten Seite zusammenwirkt und diese bis zu einer zweiten Lastschwelle in der Ausgangsstellung hält, wobei die erste Lastschwelle unterhalb der zweiten Lastschwelle liegt, **dadurch gekennzeichnet,**
**dass** ein Steuermechanismus vorgesehen ist, der die Gurtspule (14) von einer Ausgangsstellung in eine Sperrstellung verschieben kann, in der die Blockierzähne (36) mit den Sperrzähnen (38) in Eingriff steht,
und **dass** der Steuermechanismus einen rahmenseitig schwenkbar gelagerten Steuerhebel (40) aufweist, der am Blockierlager (32) angreift und die Gurtspule (14) in die Sperrstellung verschieben kann.

2. Gurtaufroller nach Anspruch 1, **dadurch gekennzeichnet, dass** die zweite Lastschwelle größer als 300N ist.

3. Gurtaufroller nach Anspruch 1 oder 2, **dadurch gekennzeichnet, dass** die Gurtspule (14) am Steuerhebel (40) gelagert ist.

4. Gurtaufroller nach einem der vorhergehenden Ansprüche, **dadurch gekennzeichnet, dass** das Blockierlager (32) einen Führungsstift (42) aufweist, der in einem schräg angestellten Führungskanal (47) gelagert ist, dessen Boden insbesondere mit der Längsachse der Gurtspule (14) einen winkel einschließt, der im Bereich von 50° bis 80°, vorzugsweise bei 60° liegt.

5. Gurtaufroller nach Anspruch 4, **dadurch gekennzeichnet, dass** der Führungskanal (47) eine Länge in der Größenordnung von 3mm hat.

6. Gurtaufroller nach einem der vorhergehenden Ansprüche, **dadurch gekennzeichnet, dass** das Blockierlager (32) und/oder das Lastlager (34) eine Rückstellfeder aufweisen, die das Blockierlager (32) und/oder das Lastlager (34) in die Ausgangsstellung beaufschlagen.

7. Gurtaufroller nach einem der vorhergehenden Ansprüche, **dadurch gekennzeichnet, dass** das Blockierlager (32) und/oder das Lastlager (34) in einer Gehäuseschale des Gehäuse angeordnet und begrenzt in diesem beweglich ist.

8. Verfahren zum Sperren einer Gurtspule (14) in einem Gurtaufroller (10) nach einem der vorhergehenden Ansprüche, **dadurch gekennzeichnet, dass** bel einer geringen Auszugskraft lediglich das Blockierlager (32) verschoben wird, sodass die Blockierzähne (36) in die Sperrzähne (38) eingreifen, und dass das Lastlager (34) erst bei einer definierten, höheren Auszugskraft verschoben wird.

## Claims

1. A belt retractor (10) comprising a frame (12) provided with locking teeth (36), a belt reel (14) which is rotatably supported in the frame (12) and is provided on at least one axial end with ratchet teeth (38) adapted to engage in the locking teeth (36) when the belt reel (14) is adjusted from a home position into a locking position, a blocking bearing (32) interacting with the belt reel (14) on the side on which the ratchet teeth (38) are arranged and retaining the latter in the home position up to a first load threshold, and a load bearing (34) interacting with the belt reel (14) on the opposite side and retaining the latter in the home position up to a second load threshold, wherein the first load threshold is below the second load threshold, **characterized in that**
a control mechanism is provided which is adapted to shift the belt reel (14) from a home position into a locking position in which the locking teeth (36) are engaged in the ratchet teeth (38).
and **in that** the control mechanism includes a control lever (40) pivoted on the frame side which acts on the blocking bearing (32) and is adapted to shift the belt reel (14) into the locking position.

2. The belt retractor according to claim 1, **characterized in that** the second load threshold is higher than 300N.

3. The belt retractor according to claim 1 or 2, **characterized in that** the belt reel (14) is supported on the control lever (40).

4. The belt retractor according to any one of the preceding claims, **characterized in that** the blocking bearing (32) includes a guide pin (42) supported in an inclined guide passage (47) the bottom of which encloses an angle, especially with the longitudinal axis of the belt reel (14), which is in the range of 50° to 80°, preferably at 60°.

5. The belt retractor according to claim 4, **characterized in that** the guide passage (47) has a length within the order of magnitude of 3mm.

6. The belt retractor according to any one of the preceding claims, **characterized in that** the blocking bearing (32) and/or the load bearing (34) have a resetting spring which forces the blocking bearing (32) and/or the load bearing (34) into the home position.

7. The belt retractor according to any one of the preceding claims, **characterized in that** the blocking bearing (32) and/or the load bearing (34) is/are arranged in a housing shell of the housing and is movable in the same to a limited extent.

8. A method of locking a belt reel (14) in a belt retractor (10) according to any one of the preceding claims, **characterized in that** with a small extension force merely the blocking bearing (32) is shifted so that the blocking teeth (36) engage in the ratchet teeth (38) and **in that** the load bearing (34) is shifted only with a defined higher extension force.

## Revendications

1. Enrouleur de ceinture (10) comportant un châssis (12) qui est muni de dents de blocage (36), un bobine de ceinture (14), qui est montée libre en rotation dans le châssis (12) et est pourvu de dents d'encliquetage (38) sur au moins une extrémité axiale, qui peuvent s'engager dans la denture de blocage (36) lorsque la bobine de ceinture (14) est déplacée d'une position initiale dans une position de verrouillage, un palier de verrouillage (32) qui coopère avec la bobine de ceinture (14) sur le côté sur lequel se trouvent les dents d'encliquetage (38) et qui supporte jusqu'à un premier seuil de charge dans la position de départ, et un support de charge (34), qui coopère avec la bobine de ceinture (14) sur le côté opposé et qui supporte jusqu'à un deuxième seuil de charge dans la position de départ, le premier seuil de charge se situant au-dessous du deuxième seuil de charge, **caractérisé en ce qu'**
un mécanisme de commande est prévu, lequel peut déplacer la bobine de ceinture (14) depuis une position de départ dans une position de verrouillage dans laquelle les dents de blocage (36) sont en prise avec les dents d'encliquetage (38),
et que le mécanisme de commande comporte un levier de commande (40) libre en rotation par rapport au châssis, levier qui coopère avec le palier de verrouillage (32) et peut déplacer la bobine de ceinture (14) en position de verrouillage.

2. Enrouleur de ceinture selon la revendication 1, **caractérisé en ce que** le second seuil de charge est supérieur à 300N.

3. Enrouleur de ceinture selon la revendication 1 ou 2, **caractérisé en ce que** la bobine de ceinture (14) est montée sur le levier de commande (40).

4. Enrouleur de ceinture selon l'une quelconque des revendications précédentes, **caractérisé en ce que** le palier de verrouillage (32) comprend une broche de guidage (42) qui est montée dans un canal de guidage (47) oblique, dont le fond, forme un angle en particulier avec l'axe longitudinal de la bobine de ceinture (14), angle dont la plage est comprise entre 50° et 80°, de préférence à 60°.

5. Enrouleur de ceinture selon la revendication 4, **caractérisé en ce que** le canal de guidage (47) a une longueur de l'ordre de 3 mm.

6. Enrouleur de ceinture selon l'une quelconque des revendications précédentes, **caractérisé en ce que** le palier de verrouillage (32) et/ou le support de charge (34) comportent un ressort de rappel qui maintient le palier de verrouillage (32) et/ou le support de charge (34) dans la position initiale.

7. Enrouleur de ceinture selon l'une quelconque des revendications précédentes, **caractérisé en ce que** le palier de verrouillage (32) et/ou le support de charge (34) est/sont disposé(s) dans une des coques du boîtier et à cet égard est/sont limité(s) en mobilité.

8. Procédé de verrouillage d'une bobine de ceinture (14) dans un enrouleur de ceinture (10) selon l'une quelconque des revendications précédentes, **caractérisé en ce que**, pour une petite force de traction, seul le palier de verrouillage (32) est déplacé de telle sorte que les dents de verrouillage (36) s'engagent dans les dents d'encliquetage (38) et que le support de charge (34) est déplacé uniquement par une force de traction définie plus élevée.
